# EUROPEAN PATENT APPLICATION

(11) **EP 4 401 451 A1**
(43) Date of publication of application: **17.07.2024**
(21) Application number: 22874521.2
(22) Date of filing: 29.08.2022
(51) Int. Cl.: H04W 16/18, H04W 36/18

(54) **METHOD AND APPARATUS FOR DEPLOYING SATELLITE CORE NETWORK, AND SYSTEM, MEDIUM AND PROGRAM PRODUCT**

(30) Priority: 29.09.2021 CN 202111158096
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Yu, Shenzhen, Guangdong 518129 (CN); WANG, Jun, Shenzhen, Guangdong 518129 (CN)
(74) Representative: Maiwald GmbH
(86) International application number: PCT/CN2022/115595
(87) International publication number: WO 2023/051130

(57) **Abstract**

This application discloses a satellite core network deployment method and apparatus, a system, a medium, and a program product. An access network satellite network element receives an access request from a terminal, obtains network topology information of a plurality of core network satellite network elements from an interface management function network element, determines a candidate core network satellite network element set based on a location area in which the access network satellite network element is located and the network topology information, where the candidate core network satellite network element set is a subset of the plurality of core network satellite network elements, and determines, from the candidate core network satellite network element set, a core network satellite network element set corresponding to the terminal based on at least one of an identifier of the access network satellite network element, an identifier of the terminal, and a location of the terminal, where each core network satellite network element in the core network satellite network element set corresponding to the terminal corresponds to one core network function. In this way, a dedicated core network satellite network element set that is dynamically updated by the terminal can be obtained, thereby reducing a latency of round-trip transmission of satellite core network signaling between a satellite and a terrestrial core network.

## Description

This application claims priority to Chinese Patent Application No. 202111158096.0, filed with the China National Intellectual Property Administration on September 29, 2021 and entitled "SATELLITE CORE NETWORK DEPLOYMENT METHOD AND APPARATUS, SYSTEM, MEDIUM, AND PROGRAM PRODUCT", which is incorporated herein by reference in its entirety.

### TECHNICAL FIELD

This application relates to the field of satellite communication technologies, and in particular, to a satellite core network deployment method and apparatus, a system, a medium, and a program product.

### BACKGROUND

A conventional terrestrial network cannot provide seamless coverage for terminals, especially in a place in which a base station cannot be deployed, for example, a sea, a desert, or the air. Therefore, a non-terrestrial network (non-terrestrial network, NTN) is introduced into a mobile communication system. The non-terrestrial network provides seamless coverage for the terminals by deploying a base station or some functions of the base station on a high-altitude platform or a satellite, and the high-altitude platform or the satellite is less affected by natural disasters. Therefore, reliability of the mobile communication system can be improved.

For example, satellite communication and a 5^{th} generation (5^{th} generation, 5G) mobile communication technology may be integrated. A terminal accesses a network through 5G new radio, and a 5G base station is deployed on a satellite, and is connected to a terrestrial core network through a radio link.

However, when the 5G base station deployed on the satellite communicates with the terrestrial core network, round-trip transmission of core network signaling is performed between the satellite and the terrestrial core network, and a latency is large. In addition, if a core network is deployed on a space-based platform, a network topology changes dynamically, and maintenance is difficult.

### SUMMARY

This application provides a satellite core network deployment method and apparatus, a system, a medium, and a program product, so that a dedicated core network satellite network element set that is dynamically updated by a terminal can be obtained, thereby reducing a latency of round-trip transmission of satellite core network signaling between a satellite and a terrestrial core network.

According to a first aspect, a satellite core network deployment method is provided. The method includes: A terminal receives, from an access network satellite network element, information about a core network satellite network element set corresponding to the terminal, where the core network satellite network element set corresponding to the terminal includes a first core network satellite network element and a second core network satellite network element, the first core network satellite network element and the second core network satellite network element belong to different layers, and the first core network satellite network element accompanies the access network satellite network element; and the terminal sends a registration request to the second core network satellite network element. In this aspect, a dedicated core network satellite network element set that is dynamically updated by the terminal can be obtained, thereby reducing a latency of round-trip transmission of satellite core network signaling between a satellite and a terrestrial core network.

In a possible implementation, the first core network satellite network element and the access network satellite network element form a satellite formation, and a spatial location relationship between the first core network satellite network element and the access network satellite network element remains unchanged. In this implementation, the first core network satellite network element and the access network satellite network element form the satellite formation, the spatial location relationship between the first core network satellite network element and the access network satellite network element remains unchanged, and a plurality of first core network satellite network elements may collaboratively provide a core network service for a nearby access network satellite network element in a formation manner.

According to a second aspect, a satellite core network deployment method is provided. The method includes: An access network satellite network element receives an access request from a terminal; the access network satellite network element obtains from an interface management function network element, network topology information of a plurality of core network satellite network elements, where the plurality of core network satellite network elements correspond to one or more core network functions; the access network satellite network element determines a candidate core network satellite network element set based on a location area in which the access network satellite network element is located and the network topology information, where the candidate core network satellite network element set is a subset of the plurality of core network satellite network elements; and the access network satellite network element determines, from the candidate core network satellite network element set, a core network satellite network element set corresponding to the terminal based on at least one of an identifier of the access network satellite network element, an identifier of the terminal, and a location of the terminal, where each core network satellite network element in the core network satellite network element set corresponding to the terminal corresponds to one core network function. In this aspect, a dedicated core network satellite network element set that is dynamically updated by the terminal can be obtained, thereby reducing a latency of round-trip transmission of satellite core network signaling between a satellite and a terrestrial core network.

In a possible implementation, the method further includes: The access network satellite network element sends, to the terminal, information about the core network satellite network element set corresponding to the terminal. In this implementation, a dedicated core network satellite network element set that is dynamically updated by the terminal can be obtained, thereby reducing a latency of round-trip transmission of satellite core network signaling between a satellite and a terrestrial core network.

In another possible implementation, the network topology information includes at least one piece of the following information: a physical layer parameter of an interface between the plurality of core network satellite network elements, a protocol stack parameter of the interface between the plurality of core network satellite network elements, orchestration information of a satellite in which the plurality of core network satellite network elements are located, and load information of the plurality of core network satellite network elements.

In still another possible implementation, that the access network satellite network element determines, from the candidate core network satellite network element set, a core network satellite network element set corresponding to the terminal based on at least one of an identifier of the access network satellite network element, an identifier of the terminal, and a location of the terminal includes: The access network satellite network element determines, from the candidate core network satellite network element set according to a hash algorithm and an average allocation rule, the core network satellite network element set corresponding to the terminal. In this implementation, load balancing of the core network satellite network elements may be implemented.

In still another possible implementation, the method further includes: The access network satellite network element switches the core network satellite network element set corresponding to the terminal to a target core network satellite network element set, where the core network satellite network element set corresponding to the terminal one-to-one corresponds to the target core network satellite network element set; and the access network satellite network element sends, to the target core network satellite network element set, a context of the core network satellite network element set corresponding to the terminal. In this implementation, when the terminal moves, the access network satellite network element sends, to the target core network satellite network element set, the context of the core network satellite network element set corresponding to the terminal. This improves communication efficiency.

In still another possible implementation, the core network satellite network element set corresponding to the terminal includes a first core network satellite network element and a second core network satellite network element, the first core network satellite network element and the second core network satellite network element belong to different layers, and the first core network satellite network element accompanies the access network satellite network element. In this implementation, a core network is layered, and the first core network satellite network element accompanies the access network satellite network element, so that a latency of interaction between the terminal, the access network satellite network element, and the core network can be reduced.

In still another possible implementation, the layer is classified based on at least one of a frequency of invoking a core network function, a security level of a service, and importance of the core network function. In this implementation, the core network satellite network element set is divided according to the foregoing division rules, so that a function of the core network satellite network element can be flexibly deployed.

In still another possible implementation, the first core network satellite network element and the access network satellite network element form a satellite formation, and a spatial location relationship between the first core network satellite network element and the access network satellite network element remains unchanged. In this implementation, the first core network satellite network element and the access network satellite network element form the satellite formation, the spatial location relationship between the first core network satellite network element and the access network satellite network element remains unchanged, and a plurality of first core network satellite network elements may collaboratively provide a core network service for a nearby access network satellite network element in a formation manner.

According to a third aspect, a satellite core network deployment method is provided. A core network satellite network element set corresponding to a terminal includes a first core network satellite network element and a second core network satellite network element, the first core network satellite network element and the second core network satellite network element belong to different layers, and the first core network satellite network element accompanies an access network satellite network element. The method includes: The first core network satellite network element receives a session establishment request from the terminal; the first core network satellite network element obtains registration information generated by the second core network satellite network element, where the registration information includes at least one piece of the following information: a user authentication context, subscription data, and a policy context; and the first core network satellite network element establishes a session based on the registration information and the session establishment request. In this aspect, a core network is layered, and the first core network satellite network element accompanies the access network satellite network element, so that a latency of interaction between the terminal, the access network satellite network element, and the core network can be reduced.

In a possible implementation, that the first core network satellite network element obtains registration information generated by the second core network satellite network element includes any one of the following operations: obtaining, by the first core network satellite network element, the registration information from the second core network satellite network element; obtaining, by the first core network satellite network element, the registration information from a temporary network element at a slave core network layer, where the first core network satellite network element is located at the slave core network layer, and the temporary network element is configured to cache the registration information obtained from the second core network satellite network element; or obtaining, by the first core network satellite network element, the registration information from a third core network satellite network element at the slave core network layer, where the third core network satellite network element is configured to cache the registration information obtained from the second core network satellite network element.

In another possible implementation, the layer is classified based on at least one of a frequency of invoking a core network function, a security level of a service, and importance of the core network function. In this implementation, the core network satellite network element set is divided according to the foregoing division rules, so that a function of the core network satellite network element can be flexibly deployed.

In still another possible implementation, the first core network satellite network element and the access network satellite network element form a satellite formation, and a spatial location relationship between the first core network satellite network element and the access network satellite network element remains unchanged. In this implementation, the first core network satellite network element and the access network satellite network element form the satellite formation, the spatial location relationship between the first core network satellite network element and the access network satellite network element remains unchanged, and a plurality of first core network satellite network elements may collaboratively provide a core network service for a nearby access network satellite network element in a formation manner.

According to a fourth aspect, a satellite core network deployment method is provided. A core network satellite network element set corresponding to a terminal includes a first core network satellite network element and a second core network satellite network element, the first core network satellite network element and the second core network satellite network element belong to different layers, and the first core network satellite network element accompanies an access network satellite network element. The method includes: The second core network satellite network element receives a registration request from the terminal; the second core network satellite network element, performs a registration operation based on the registration request, to obtain registration information, where the registration information includes at least one piece of the following information: a user authentication context, subscription data, and a policy context; and the second core network satellite network element stores the registration information, or sends the registration information to a temporary network element or a third core network satellite network element located at a slave core network layer for caching. In this aspect, a core network is layered, the terminal initially accesses a master core network layer, the second core network satellite network element performs the registration operation, and the second core network satellite network element migrates the registration information to the slave core network layer. This flexibly implements deployment of a core network satellite network element function, reduces a latency of interaction between the terminal, the access network satellite network element, and the core network.

In a possible implementation, the layer is classified based on at least one of a frequency of invoking a core network function, a security level of a service, and importance of the core network function. In this implementation, the core network satellite network element set is divided according to the foregoing division rules, so that a function of the core network satellite network element can be flexibly deployed.

In another possible implementation, the first core network satellite network element and the access network satellite network element form a satellite formation, and a spatial location relationship between the first core network satellite network element and the access network satellite network element remains unchanged. In this implementation, the first core network satellite network element and the access network satellite network element form the satellite formation, the spatial location relationship between the first core network satellite network element and the access network satellite network element remains unchanged, and a plurality of first core network satellite network elements may collaboratively provide a core network service for a nearby access network satellite network element in a formation manner.

According to a fifth aspect, a satellite core network deployment apparatus is provided, to implement the satellite core network deployment method in the first aspect. For example, the satellite core network deployment apparatus may be a chip or a terminal. The foregoing method may be implemented by using software, hardware, or hardware executing corresponding software.

In a possible implementation, the apparatus includes a transceiver unit that is configured to receive, from an access network satellite network element, information about a core network satellite network element set corresponding to a terminal, where the core network satellite network element set corresponding to the terminal includes a first core network satellite network element and a second core network satellite network element, the first core network satellite network element and the second core network satellite network element belong to different layers, and the first core network satellite network element accompanies the access network satellite network element; and the transceiver unit is further configured send a registration request to the second core network satellite network element.

Optionally, the first core network satellite network element and the access network satellite network element form a satellite formation, and a spatial location relationship between the first core network satellite network element and the access network satellite network element remains unchanged. In this implementation, the first core network satellite network element and the access network satellite network element form the satellite formation, the spatial location relationship between the first core network satellite network element and the access network satellite network element remains unchanged, and a plurality of first core network satellite network elements may collaboratively provide a core network service for a nearby access network satellite network element in a formation manner.

According to a sixth aspect, a satellite core network deployment apparatus is provided, to implement the satellite core network deployment method in the second aspect. For example, the satellite core network deployment apparatus may be a chip or an access network satellite network element. The foregoing method may be implemented by using software, hardware, or hardware executing corresponding software.

In a possible implementation, the apparatus includes a transceiver unit and a processing unit; the transceiver unit is configured to receive an access request from a terminal; the processing unit is configured to obtain network topology information of a plurality of core network satellite network elements from an interface management function network element, where the plurality of core network satellite network elements correspond to one or more core network functions; the processing unit is further configured to determine a candidate core network satellite network element set based on a location area in which an access network satellite network element is located and the network topology information, where the candidate core network satellite network element set is a subset of the plurality of core network satellite network elements; and the processing unit is further configured to determine, from the candidate core network satellite network element set based on at least one of an identifier of the access network satellite network element, an identifier of the terminal, and a location of the terminal, a core network satellite network element set corresponding to the terminal, where each core network satellite network element in the core network satellite network element set corresponding to the terminal corresponds to one core network function.

Optionally, the transceiver unit is further configured to send, to the terminal, information about the core network satellite network element set corresponding to the terminal.

Optionally, the network topology information includes at least one piece of the following information: a physical layer parameter of an interface between the plurality of core network satellite network elements, a protocol stack parameter of the interface between the plurality of core network satellite network elements, orchestration information of a satellite in which the plurality of core network satellite network elements are located, and load information of the plurality of core network satellite network elements.

Optionally, the processing unit is configured to determine, from the candidate core network satellite network element set according to a hash algorithm and an average allocation rule, the core network satellite network element set corresponding to the terminal.

Optionally, the processing unit is further configured to switch the core network satellite network element set corresponding to the terminal to a target core network satellite network element set, where the core network satellite network element set corresponding to the terminal one-to-one corresponds to the target core network satellite network element set; and the transceiver unit is further configured to send, to the target core network satellite network element set, a context of the core network satellite network element set corresponding to the terminal.

Optionally, the core network satellite network element set corresponding to the terminal includes a first core network satellite network element and a second core network satellite network element, the first core network satellite network element and the second core network satellite network element belong to different layers, and the first core network satellite network element accompanies the access network satellite network element.

Optionally, the layer is classified based on at least one of a frequency of invoking a core network function, a security level of a service, and importance of the core network function.

According to a seventh aspect, a satellite core network deployment apparatus is provided, to implement the satellite core network deployment method in the third aspect. For example, the satellite core network deployment apparatus may be a chip or a first core network satellite network element. The foregoing method may be implemented by using software, hardware, or hardware executing corresponding software.

In a possible implementation, the apparatus includes a transceiver unit and a processing unit; a core network satellite network element set corresponding to a terminal includes a first core network satellite network element and a second core network satellite network element, the first core network satellite network element and the second core network satellite network element belong to different layers, and the first core network satellite network element accompanies an access network satellite network element; the transceiver unit is configured to receive a session establishment request from the terminal; the transceiver unit is further configured to obtain registration information generated by the second core network satellite network element, where the registration information includes at least one piece of the following information: a user authentication context, subscription data, and a policy context; and the processing unit is configured to establish a session based on the registration information and the session establishment request.

Optionally, the transceiver unit is configured to perform any one of the following operations: obtaining the registration information from the second core network satellite network element; obtaining the registration information from a temporary network element at a slave core network layer, where the apparatus is located at the slave core network layer, and the temporary network element is configured to cache the registration information obtained from the second core network satellite network element; or obtaining the registration information from a third core network satellite network element at the slave core network layer, where the third core network satellite network element is configured to cache the registration information obtained from the second core network satellite network element.

Optionally, the layer is classified based on at least one of a frequency of invoking a core network function, a security level of a service, and importance of the core network function.

According to an eighth aspect, a satellite core network deployment apparatus is provided, to implement the satellite core network deployment method in the fourth aspect. For example, the satellite core network deployment apparatus may be a chip or a second core network satellite network element. The foregoing method may be implemented by using software, hardware, or hardware executing corresponding software.

In a possible implementation, the apparatus includes a transceiver unit and a processing unit; a core network satellite network element set corresponding to a terminal includes a first core network satellite network element and a second core network satellite network element, the first core network satellite network element and the second core network satellite network element belong to different layers, and the first core network satellite network element accompanies an access network satellite network element; the transceiver unit is configured to receive a registration request from the terminal; the processing unit is configured to perform a registration operation based on the registration request, to obtain registration information, where the registration information includes at least one piece of the following information: a user authentication context, subscription data, and a policy context; and the processing unit is further configured to: control the apparatus to store the registration information, or send the registration information to a temporary network element or a third core network satellite network element located at a slave core network layer for caching.

Optionally, the layer is classified based on at least one of a frequency of invoking a core network function, a security level of a service, and importance of the core network function.

In a possible implementation, the satellite core network deployment apparatus in the fifth aspect to the eighth aspect includes a processor coupled to a memory; and the processor is configured to support the apparatus in performing a corresponding function in the foregoing satellite core network deployment method. The memory is configured to be coupled to the processor, and stores a program (instructions) and/or data necessary for the apparatus. Optionally, the satellite core network deployment apparatus may further include a communication interface that is configured to support communication between the apparatus and another network element. Optionally, the memory may be located inside the satellite core network deployment apparatus, or may be located outside the satellite core network deployment apparatus.

In still another possible implementation, the satellite core network deployment apparatus in the fifth aspect to the eighth aspect includes a processor and a transceiver apparatus, the processor is coupled to the transceiver apparatus, and the processor is configured to execute a computer program or instructions to control the transceiver apparatus to receive and send information; and when the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from another satellite core network deployment apparatus other than the satellite core network deployment apparatus, and transmit the signal to the processor, or send a signal from the processor to the another satellite core network deployment apparatus other than the satellite core network deployment apparatus. When the satellite core network deployment apparatus is a chip, the transceiver apparatus is a transceiver circuit or an input/output interface.

When the satellite core network deployment apparatus in the fifth aspect to the eighth aspect is a chip, a sending unit may be an output unit, for example, an output circuit or a communication interface, and a receiving unit may be an input unit, for example, an input circuit or a communication interface. When the satellite core network deployment apparatus is a terminal, a sending unit may be a transmitter or a transmitter machine, and a receiving unit may be a receiver or a receiver machine.

According to a ninth aspect, a satellite communication system is provided, including the apparatus according to the fifth aspect to the sixth aspect.

According to a tenth aspect, a computer-readable storage medium is provided. The computer-readable storage medium stores a computer program, and when the program is executed by a processor, the method according to any one of the first aspect to the fourth aspect or the implementations is implemented.

According to an eleventh aspect, a computer program product is provided. When being executed on a computing device, the method according to any one of the first aspect to the fourth aspect or the implementations is performed.

### BRIEF DESCRIPTION OF DRAWINGS

FIG. 1 is a schematic diagram of an architecture of a satellite communication system to which this application is applicable;
FIG. 2 is a schematic flowchart of a satellite core network deployment method according to an embodiment of this application;
FIG. 3 is a schematic diagram of a 5G service-based core network architecture according to an embodiment of this application;
FIG. 4 is a schematic diagram of an example of a change of a link between core network satellite network elements according to an embodiment of this application;
FIG. 5 is a schematic diagram of an example in which an access network satellite network element determines a core network satellite network element set corresponding to a terminal according to an embodiment of this application;
FIG. 6 is a schematic diagram of master/slave core network layering according to an embodiment of this application;
FIG. 7 is a schematic flowchart of another satellite core network deployment method according to an embodiment of this application;
FIG. 8 is a schematic diagram of a structure of a satellite core network deployment apparatus according to an embodiment of this application; and
FIG. 9 is a schematic diagram of a structure of another satellite core network deployment apparatus according to an embodiment of this application.

### DESCRIPTION OF EMBODIMENTS

The following describes embodiments of this application with reference to the accompanying drawings in embodiments of this application.

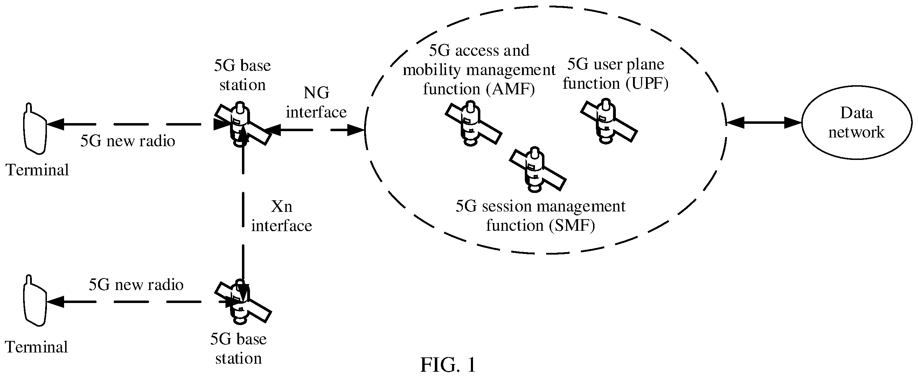

FIG. 1 is a schematic diagram of an architecture of a satellite communication system to which this application is applicable. The satellite communication system integrates satellite communication and mobile communication technologies (without loss of generality, 5G communication is used as an example in this application, but this application may also be applied to next-generation mobile communication, and details are not described below). A terrestrial mobile terminal accesses a network through 5G new radio, and an access network satellite network element (for example, a 5G base station) is deployed on a satellite, and is connected to a space-based core network through a radio link. In addition, radio links exist between satellites, to implement signaling interaction and user data transmission between access network satellite network elements.

Network elements and interfaces between the network elements in FIG. 1 are described as follows.

Terminal: A terminal may also be referred to as a terminal device (terminal device), user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal are not limited in embodiments of this application. In this application, the terminal refers to a mobile device that supports 5G new radio. The terminal may access a satellite network through an air interface and initiate services such as call and Internet access.

Access network satellite network element: An access network satellite network element mainly provides radio access services, schedules radio resources for access terminals, and provides reliable wireless transmission protocols and data encryption protocols. The access network satellite network element may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU) or a distributed unit (distributed unit, DU). A radio access network satellite network element may be a macro base station, may be a micro base station or an indoor base station, or may be a relay node, a donor node, or the like. A specific technology and a specific device form used by the radio access network satellite network element are not limited in embodiments of this application.

5G core network: A 5G core network includes a plurality of functional units, may be classified into a control plane functional entity and a data plane functional entity, and implements functions such as user access control, mobility management, session management, user security authentication, and charging. An access and mobility management function (access and mobility management function, AMF) is responsible for user access management, security authentication, and mobility management. A user plane function (user plane function, UPF) is used to manage functions such as user plane data transmission and traffic statistics collection.

5G new radio: 5G new radio is a radio link between a terminal and a 5G base station.

Xn interface: An Xn interface is an interface between 5G base stations, and is mainly used for signaling exchange, for example, handover.

NG interface: An NG interface is an interface between a 5G base station and a 5G core network, and is mainly used for exchange of non-access stratum (non-access stratum, NAS) signaling of the core network and user service data.

Based on the satellite communication system shown in FIG. 1, this application provides a satellite core network deployment solution. In this solution, the access network satellite network element receives an access request from the terminal, obtains network topology information of a plurality of core network satellite network elements from an interface management function network element, determines a candidate core network satellite network element set based on a location area in which the access network satellite network element is located and the network topology information, where the candidate core network satellite network element set is a subset of the plurality of core network satellite network elements, and determines, from the candidate core network satellite network element set, a core network satellite network element set corresponding to the terminal based on at least one of an identifier of the access network satellite network element, an identifier of the terminal, and a location of the terminal, where each core network satellite network element in the core network satellite network element set corresponding to the terminal corresponds to one core network function. In this way, a dedicated core network satellite network element set that is dynamically updated by the terminal can be obtained, thereby reducing a latency of round-trip transmission of satellite core network signaling between a satellite and a terrestrial core network.

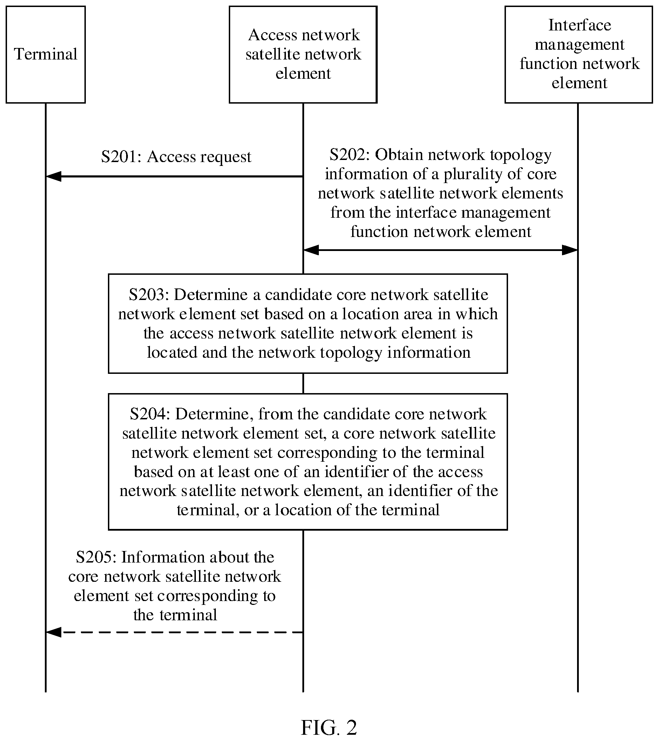

FIG. 2 is a schematic flowchart of a satellite core network deployment method according to an embodiment of this application. The method includes the following steps.

S201: A terminal sends an access request to an access network satellite network element.

When initiating random access, the terminal sends the access request to the access network satellite network element. Correspondingly, the access network satellite network element receives the access request.

S202: The access network satellite network element obtains network topology information of a plurality of core network satellite network elements from an interface management function network element.

In this embodiment, the plurality of core network satellite network elements deployed on a satellite perform operations such as scanning, capturing, tracking, and aligning based on an ephemeris, to establish a physical connection between satellites. Then, the plurality of core network satellite network elements are configured as local endpoints of links, and after peer endpoints of the links are configured, the plurality of core network satellite network elements automatically complete establishment of logical links in a self-organizing network (self-organizing network, SON) manner. The plurality of core network satellite network elements correspond to one or more core network functions. One core network satellite network element may correspond to one core network function, or may integrate a plurality of core network functions. The core network functions include a user plane function (user plane function, UPF), a session management function (session management function, SMF), an access and mobility management function (access and mobility management function, AMF), and the like.

In this embodiment, the interface management function (interface management function, IMF) network element is added to a space-based node. The IMF network element may be an entity unit deployed on a network element, or may be a software module. The IMF network element collects the network topology information of the plurality of core network satellite network elements and caches the information locally. The network topology information includes at least one piece of the following information: a physical layer parameter of an interface between the plurality of core network satellite network elements, a protocol stack parameter of the interface between the plurality of core network satellite network elements, orchestration information of the satellite in which the plurality of core network satellite network elements are located, and load information of the plurality of core network satellite network elements.

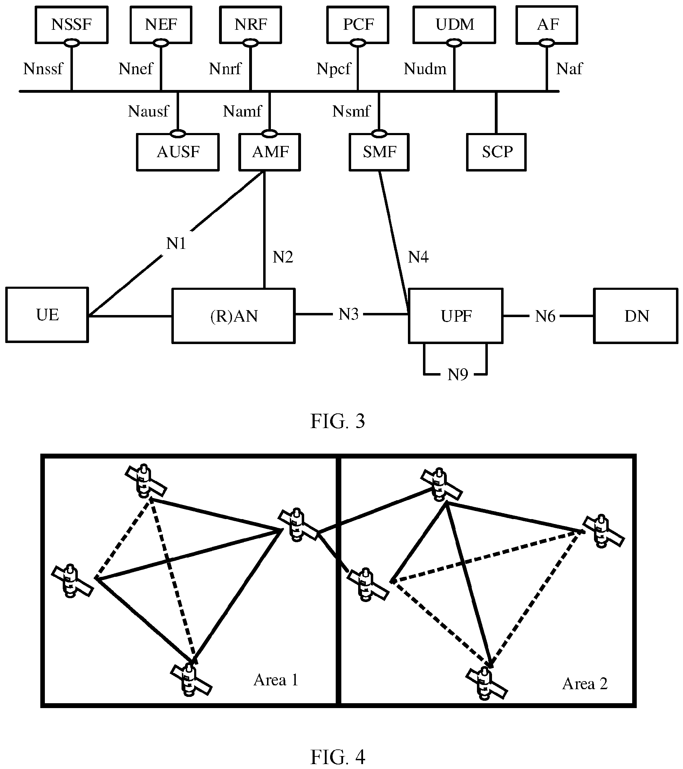

FIG. 3 is a schematic diagram of a 5G service-based core network architecture (service-based architecture) according to an embodiment of this application. Decoupling and integration between network functions are implemented through modularization. A core network satellite network element exhibits capabilities of the core network satellite network element in a form of services through a service-based interface of the core network satellite network element. These services may be invoked by other network elements. There are two types of forms of services:

Request (request)-response (response) mode: One core network satellite network element (which may be used as a service consumer (consumer)) finds address information of another core network satellite network element (which may be used as a service producer (producer)) through a "service discovery" process, and sends a request message to the producer for requesting. The producer performs actions and returns the information required by the consumer.

Subscribe (subscribe)-notify (notify) mode: A consumer subscribes to an event from a producer and provides information about a callback (callback) address of the consumer; and when the subscribed event occurs, the producer sends a notification message to the callback address of the consumer for notification.

The IMF network element may alternatively provide services about the network topology information in the request-response mode and the subscribe-notify mode. As shown in the following Table 1, the IMF network element provides initial network topology information for the UPF network element in the request-response mode. Alternatively, the IMF network element may provide updated network topology information for the UPF network element in the subscribe-notify mode when the IMF network element detects that an interface between core network satellite network elements changes. FIG. 4 is a schematic diagram of an example of a change of a link between core network satellite network elements according to an embodiment of this application. The IMF network element detects that core network satellite network elements in an area 1 move to an area 2, and the IMF network element updates network topology information in time, and notifies the UPF network element of the updated network topology information in time.

**Table 1**

| Service name | Service mode | Message name | Core network satellite network element | Description |
|---|---|---|---|---|
| N_{imf_Communication} | Network topology information | Request-response | For example, an IMF/UPF | Provide initial network topology information |
| | Updated network topology information | Subscribe-notify | For example, an IMF/UPF | Provide updated network topology information |

The access network satellite network element obtains the network topology information of the plurality of core network satellite network elements from the interface management function network element.

S203: The access network satellite network element determines a candidate core network satellite network element set based on a location area in which the access network satellite network element is located and the network topology information.

After the access network satellite network element obtains the network topology information of the plurality of core network satellite network elements, to reduce a round-trip latency between the access network satellite network element and the core network satellite network elements, the access network satellite network element determines the candidate core network satellite network element set based on the location area of the access network satellite network element and the network topology information. The candidate core network satellite network element set is a subset of the plurality of core network satellite network elements.

S204: The access network satellite network element determines, from the candidate core network satellite network element set, a core network satellite network element set corresponding to the terminal based on at least one of an identifier of the access network satellite network element, an identifier of the terminal, and a location of the terminal.

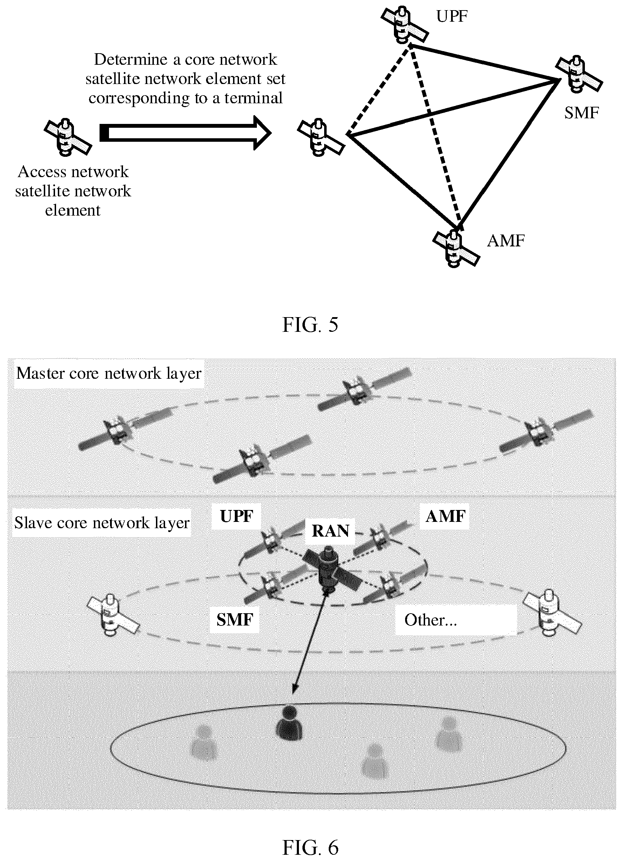

After the access network satellite network element determines the candidate core network satellite network element set, the access network satellite network element determines, from the candidate core network satellite network element set, the core network satellite network element set corresponding to the terminal based on at least one of the identifier of the access network satellite network element, the identifier of the terminal, and the location of the terminal, where the candidate core network satellite network element set may include one or more network elements with a same core network function. FIG. 5 is a schematic diagram of an example in which the access network satellite network element determines the core network satellite network element set corresponding to the terminal according to an embodiment of this application. Each core network satellite network element in the core network satellite network element set that corresponds to the terminal and that is determined by the access network satellite network element corresponds to one core network function. Therefore, a complete set of core network functions corresponding to the terminal may be obtained, for example, the core network functions include a UPF, an AMF, and an SMF.

The access network satellite network element may receive access requests of a plurality of terminals. To balance load of a core network satellite network element set, for example, the access network satellite network element may determine, from the candidate core network satellite network element set according to a hash algorithm and an average allocation rule, the core network satellite network element set corresponding to the terminal.

For example, FIG. 6 is a schematic diagram of master/slave core network layering according to an embodiment of this application. The core network satellite network element set corresponding to the terminal includes a first core network satellite network element (which is a core network satellite network element at a slave core network layer shown in FIG. 6) and a second core network satellite network element (which is a core network satellite network element at a master core network layer shown in FIG. 6). The first core network satellite network element and the second core network satellite network element belong to different layers (master/slave core network layer). The second core network satellite network element may be deployed on the ground, or may be deployed on a space-based platform (for example, on a high-Earth orbit satellite).

For example, the layer is classified based on at least one of a frequency of invoking a core network function, a security level of a service, importance of the core network function, and complexity of the core network function. For example, some core network functions (such as authentication) are invoked at a low frequency, and these core network functions may be set on the second core network satellite network element; and some core network functions (such as the user plane function, the session management function, and the access and mobility management function) are invoked at a high frequency, and these core network functions may be set on the first core network satellite network element. For another example, services executed by some core network functions have a high security level, and the core network functions may be set on the second core network satellite network element; and services executed by some core network functions have a low security level, and the core network functions may be set on the first core network satellite network element. Certainly, services executed by some core network functions may have a low security level, and the core network functions may be set on the second core network satellite network element; and services executed by some core network functions may have a high security level, and the core network functions may be set on the first core network satellite network element. For another example, importance of some core network functions is high, and the core network functions may be set on the second core network satellite network element; and importance of some core network functions is low, and the core network functions may be set on the first core network satellite network element. Certainly, importance of some core network functions may be low, and the core network functions may be set on the second core network satellite network element; and importance of some core network functions may be high, and the core network functions may be set on the first core network satellite network element. For another example, complexity of some core network functions is high, and the core network functions may be set on the second core network satellite network element; and complexity of some core network functions is low, and the core network functions may be set on the first core network satellite network element. Certainly, complexity of some core network functions may be low, and the core network functions may be set on the second core network satellite network element; and complexity of some core network functions may be high, and the core network functions may be set on the first core network satellite network element.

As shown in FIG. 6, the first core network satellite network element (for example, a UPF network element, an SMF network element, and an AMF network element) located at the slave core network layer accompanies the access network satellite network element (RAN). That the first core network satellite network element accompanies the access network satellite network element means that the first core network satellite network element and the access network satellite network element form a satellite formation, a spatial location relationship between the first core network satellite network element and the access network satellite network element remains unchanged, and a plurality of first core network satellite network elements may collaboratively provide a core network service for a nearby access network satellite network element in a formation manner. Further, the method may further include the following steps (represented by dotted lines in the figure):
S205: The access network satellite network element sends, to the terminal, information about the core network satellite network element set corresponding to the terminal.

Correspondingly, the terminal receives the information about the core network satellite network element set corresponding to the terminal.

Further, if the terminal moves, the core network satellite network element set corresponding to the terminal changes. In this case, the access network satellite network element sends, to a target core network satellite network element set, a context of the core network satellite network element set corresponding to the terminal. This can improve communication efficiency.

According to the satellite core network deployment method provided in this embodiment of this application, a dedicated core network satellite network element set that is dynamically updated by the terminal can be obtained, thereby reducing a latency of round-trip transmission of satellite core network signaling between a satellite and a terrestrial core network.

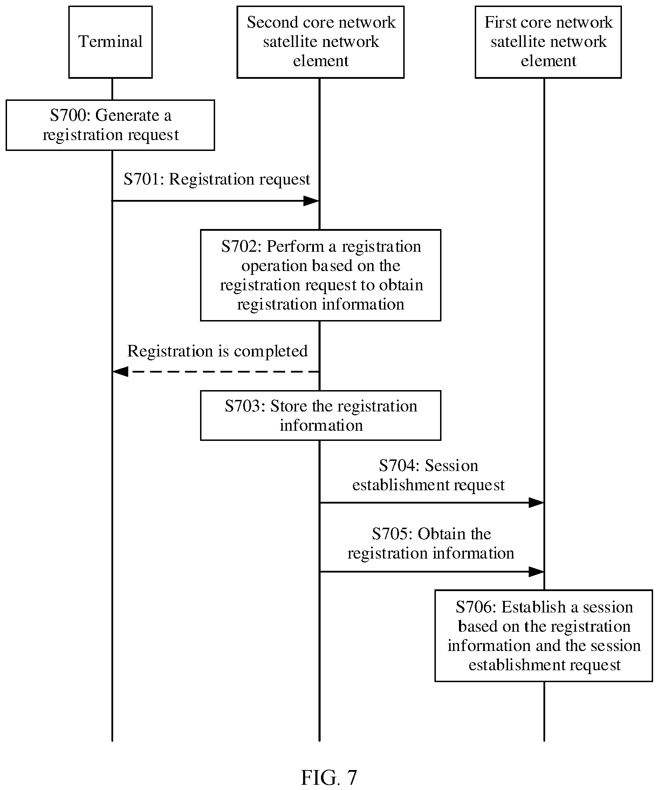

FIG. 7 is a schematic flowchart of another satellite core network deployment method according to an embodiment of this application. The method includes the following steps.

S700: A terminal generates a registration request.

When the terminal initially accesses a core network, the terminal accesses a master core network layer. The terminal generates the registration request, where the registration request is used to request to register with the core network.

S701: The terminal sends the registration request to a second core network satellite network element.

Specifically, the terminal may send the registration request to the second core network satellite network element through an access network satellite network element.

Correspondingly, the second core network satellite network element receives the registration request.

In this embodiment, a core network satellite network element set includes a first core network satellite network element (which is a core network satellite network element at a slave core network layer shown in FIG. 6) and the second core network satellite network element (which is a core network satellite network element at a master core network layer shown in FIG. 6). The first core network satellite network element and the second core network satellite network element belong to different layers (master/slave core network layer). The second core network satellite network element may be deployed on the ground, or may be deployed on a space-based platform (for example, on a high-Earth orbit satellite).

For example, the layer is classified based on at least one of a frequency of invoking a core network function, a security level of a service, importance of the core network function, and complexity of the core network function. For example, some core network functions (such as authentication) are invoked at a low frequency, and these core network functions may be set on the second core network satellite network element; and some core network functions (such as a user plane function, a session management function, and an access and mobility management function) are invoked at a high frequency, and these core network functions may be set on the first core network satellite network element. For another example, services executed by some core network functions have a high security level, and the core network functions may be set on the second core network satellite network element; and services executed by some core network functions have a low security level, and the core network functions may be set on the first core network satellite network element. Certainly, services executed by some core network functions may have a low security level, and the core network functions may be set on the second core network satellite network element; and services executed by some core network functions may have a high security level, and the core network functions may be set on the first core network satellite network element. For another example, importance of some core network functions is high, and the core network functions may be set on the second core network satellite network element; and importance of some core network functions is low, and the core network functions may be set on the first core network satellite network element. Certainly, importance of some core network functions may be low, and the core network functions may be set on the second core network satellite network element; and importance of some core network functions may be high, and the core network functions may be set on the first core network satellite network element. For another example, complexity of some core network functions is high, and the core network functions may be set on the second core network satellite network element; and complexity of some core network functions is low, and the core network functions may be set on the first core network satellite network element. Certainly, complexity of some core network functions may be low, and the core network functions may be set on the second core network satellite network element; and complexity of some core network functions may be high, and the core network functions may be set on the first core network satellite network element.

As shown in FIG. 6, the first core network satellite network element (for example, a UPF network element, an SMF network element, and an AMF network element) located at the slave core network layer accompanies the access network satellite network element (RAN). That the first core network satellite network element accompanies the access network satellite network element means that the first core network satellite network element and the access network satellite network element form a satellite formation, a spatial location relationship between the first core network satellite network element and the access network satellite network element remains unchanged, and a plurality of first core network satellite network elements may collaboratively provide a core network service for a nearby access network satellite network element in a formation manner.

When the terminal initially accesses a core network, the terminal accesses a master core network layer. The terminal sends the registration request to the second core network satellite network element, where the registration request is used to request to register with the core network. The second core network satellite network element receives the registration request.

S702: The second core network satellite network element performs a registration operation based on the registration request, to obtain registration information.

After receiving the registration request of the terminal, the second core network satellite network element completes the registration operation such as authentication, obtaining subscription data, and policy selection, and after registration succeeds, and the second core network satellite network element obtains the registration information. The registration information includes at least one piece of the following information: a user authentication context, subscription data, and a policy context.

Optionally, the second core network satellite network element may send a registration complete message to the terminal through the access network satellite network element.

S703: The second core network satellite network element stores the registration information.

After completing the registration operation, the second core network satellite network element may locally store the registration information.

Alternatively, the second core network satellite network element may send the registration information to a temporary network element (temp-entity) located at the slave core network layer for caching. In this case, the second core network satellite network element serves as an anchor to provide backup and migration of the registration information for the first core network satellite network element. The temporary network element may be an independent network element (a third core network satellite network element) at the slave core network layer, and is configured to cache the registration information delivered by the second core network satellite network element. Alternatively, the temporary network element may be a module in the first core network satellite network element, and is configured to cache the registration information delivered by the second core network satellite network element. For example, the temporary network element may be embedded in the first core network satellite network element. For example, a temporary authentication server function (authentication server function, AUSF) network element may be embedded and deployed in the AMF network element, and is configured to cache the authentication context delivered by the second core network satellite network element. For another example, a temporary policy control function (policy control function, PCF) network element may be embedded and deployed in the SMF network element, and is configured to cache the policy context delivered by the second core network satellite network element.

S704: The terminal sends a session establishment request to the first core network satellite network element.

After completing registration at the master core network layer, the terminal may send the session establishment request to the first core network satellite network element located at the slave core layer, where the session establishment request is used to request to establish a session. Correspondingly, the first core network satellite network element receives the session establishment request.

S705: The first core network satellite network element obtains the registration information from the second core network satellite network element.

After receiving the session establishment request of the terminal, the first core network satellite network element needs to obtain the registration information of the terminal. In the step S703, the second core network satellite network element stores the registration information of the terminal. Therefore, the first core network satellite network element may obtain the registration information from the second core network satellite network element.

Alternatively, it is assumed that the second core network satellite network element sends the registration information to the temporary network element located at the slave core network for caching. In this case, the first core network satellite network element may obtain the registration information from the temporary network element at the slave core network layer.

S706: The first core network satellite network element establishes a session based on the registration information and the session establishment request.

After obtaining the registration information of the terminal, the first core network satellite network element may establish the session based on the session establishment request initiated by the terminal. Specifically, for example, the first core network satellite network element may obtain the authentication context of the terminal from the temporary AUSF network element, and establish the session for the terminal after determining that authentication on the terminal succeeds. For another example, the first core network satellite network element may obtain the policy context for the terminal from the temporary PCF network element, and execute a corresponding policy on a to-be-established session.

According to the satellite core network deployment method provided in this embodiment of this application, a core network is layered, and the first core network satellite network element accompanies the access network satellite network element, so that a latency of interaction between the terminal, the access network satellite network element, and the core network can be reduced.

It may be understood that, to implement the functions in the foregoing embodiments, the terminal/access network satellite network element/first core network satellite network element/second core network satellite network element includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

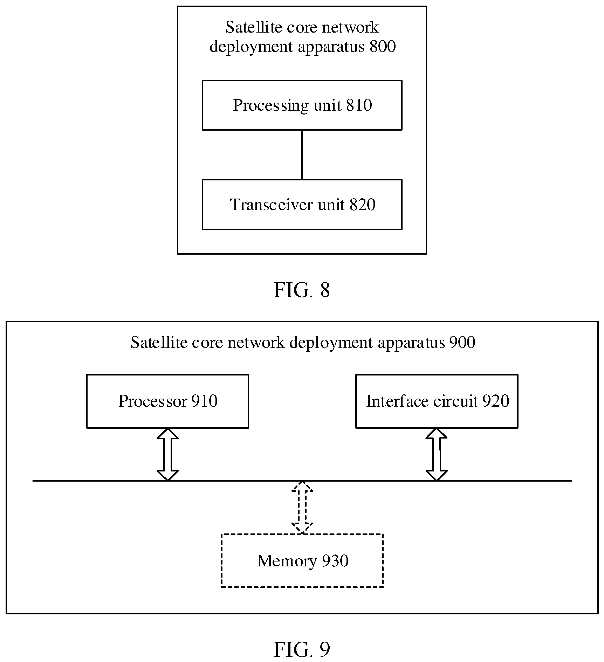

FIG. 8 and FIG. 9 each are a schematic diagram of a structure of a possible satellite core network deployment apparatus according to an embodiment of this application. These satellite core network deployment apparatuses may be configured to implement functions of a terminal/access network satellite network element/first core network satellite network element/second core network satellite network element in the foregoing method embodiments. Therefore, these satellite core network deployment apparatuses can also implement beneficial effects of the foregoing method embodiments. In this embodiment of this application, the satellite core network deployment apparatus may be the terminal/access network satellite network element/first core network satellite network element/second core network satellite network element, or may be a module (for example, a chip) used in the terminal/access network satellite network element/first core network satellite network element/second core network satellite network element.

As shown in FIG. 8, a satellite core network deployment apparatus 800 includes a processing unit 810 and a transceiver unit 820. The satellite core network deployment apparatus 800 is configured to implement functions of a terminal or an access network satellite network element in the method embodiment shown in FIG. 2, or the satellite core network deployment apparatus 800 is configured to implement functions of a first core network satellite network element or a second core network satellite network element in the method embodiment shown in FIG. 7.

When the satellite core network deployment apparatus 800 is configured to implement functions of the terminal in the method embodiment shown in FIG. 2, transceiver unit 820 is configured to receive, from an access network satellite network element, information about a core network satellite network element set corresponding to the terminal, where the core network satellite network element set corresponding to the terminal includes a first core network satellite network element and a second core network satellite network element, the first core network satellite network element and the second core network satellite network element belong to different layers, and the first core network satellite network element accompanies the access network satellite network element; and the transceiver unit 820 is further configured send a registration request to the second core network satellite network element. In this case, the processing unit 810 is configured to generate a registration request.

Optionally, the first core network satellite network element and the access network satellite network element form a satellite formation, and a spatial location relationship between the first core network satellite network element and the access network satellite network element remains unchanged.

When the satellite core network deployment apparatus 800 is configured to implement functions of the access network satellite network element in the method embodiment shown in FIG. 2, the transceiver unit 820 is configured to receive an access request from a terminal; the processing unit 810 is configured to obtain network topology information of a plurality of core network satellite network elements from an interface management function network element, where the plurality of core network satellite network elements correspond to one or more core network functions; the processing unit 810 is further configured to determine a candidate core network satellite network element set based on a location area in which an access network satellite network element is located and the network topology information, where the candidate core network satellite network element set is a subset of the plurality of core network satellite network elements; and the processing unit 810 is further configured to determine, from the candidate core network satellite network element set, a core network satellite network element set corresponding to the terminal based on at least one of an identifier of the access network satellite network element, an identifier of the terminal, and a location of the terminal, where each core network satellite network element in the core network satellite network element set corresponding to the terminal corresponds to one core network function.

Optionally, the transceiver unit 820 is further configured to send, to the terminal, information about the core network satellite network element set corresponding to the terminal.

Optionally, the network topology information includes at least one piece of the following information: a physical layer parameter of an interface between the plurality of core network satellite network elements, a protocol stack parameter of the interface between the plurality of core network satellite network elements, orchestration information of a satellite in which the plurality of core network satellite network elements are located, and load information of the plurality of core network satellite network elements.

Optionally, the processing unit 810 is configured to determine, from the candidate core network satellite network element set according to a hash algorithm and an average allocation rule, the core network satellite network element set corresponding to the terminal.

Optionally, the processing unit 810 is further configured to switch the core network satellite network element set corresponding to the terminal to a target core network satellite network element set, where the core network satellite network element set corresponding to the terminal one-to-one corresponds to the target core network satellite network element set; and the transceiver unit 820 is further configured to send, to the target core network satellite network element set, a context of the core network satellite network element set corresponding to the terminal.

Optionally, the core network satellite network element set corresponding to the terminal includes a first core network satellite network element and a second core network satellite network element, the first core network satellite network element and the second core network satellite network element belong to different layers, and the first core network satellite network element accompanies the access network satellite network element.

Optionally, the layer is classified based on at least one of a frequency of invoking a core network function, a security level of a service, and importance of the core network function.

Optionally, the first core network satellite network element and the access network satellite network element form a satellite formation, and a spatial location relationship between the first core network satellite network element and the access network satellite network element remains unchanged.

When the satellite core network deployment apparatus 800 is configured to implement functions of the first core network satellite network element in the method embodiment shown in FIG. 7, the transceiver unit 820 is configured to receive a session establishment request from a terminal; the processing unit 810 is configured to obtain registration information generated by a second core network satellite network element, where the registration information includes at least one piece of the following information: a user authentication context, subscription data, and a policy context; and the processing unit 810 is further configured to establish a session based on the registration information and the session establishment request.

Optionally, the transceiver unit 820 is configured to obtain the registration information from the second core network satellite network element; the transceiver unit 820 is further configured to obtain the registration information from a temporary network element at a slave core network layer, where the apparatus is located at the slave core network layer, and the temporary network element is configured to cache the registration information obtained from the second core network satellite network element; or the transceiver unit 820 is further configured to obtain the registration information from a third core network satellite network element at the slave core network layer, where the third core network satellite network element is configured to cache the registration information obtained from the second core network satellite network element.

Optionally, a layer is classified based on at least one of a frequency of invoking a core network function, a security level of a service, and importance of the core network function.

Optionally, the first core network satellite network element and an access network satellite network element form a satellite formation, and a spatial location relationship between the first core network satellite network element and the access network satellite network element remains unchanged.

When the satellite core network deployment apparatus 800 is configured to implement functions of the second core network satellite network element in the method embodiment shown in FIG. 7, the transceiver unit 820 is configured to receive a registration request from a terminal; the processing unit 810 is configured to perform a registration operation based on the registration request to obtain registration information, where the registration information includes at least one piece of the following information: a user authentication context, subscription data, and a policy context; and the processing unit 810 is further configured to store the registration information, or the transceiver unit 820 is further configured to send the registration information to a temporary network element or a third core network satellite network element located at a slave core network layer for caching.

Optionally, a layer is classified based on at least one of a frequency of invoking a core network function, a security level of a service, and importance of the core network function.

Optionally, a first core network satellite network element and an access network satellite network element form a satellite formation, and a spatial location relationship between the first core network satellite network element and the access network satellite network element remains unchanged.

For more detailed descriptions of the processing unit 810 and the transceiver unit 820, refer directly to related descriptions in the method embodiment shown in FIG. 2 or FIG. 7. Details are not described herein again.

As shown in FIG. 9, a satellite core network deployment apparatus 900 includes a processor 910 and an interface circuit 920. The processor 910 and the interface circuit 920 are coupled to each other. It may be understood that the interface circuit 920 may be a transceiver or an input/output interface. Optionally, the satellite core network deployment apparatus 900 may further include a memory 930 that is configured to: store instructions executed by the processor 910, store input data required by the processor 910 to run the instructions, or store data generated after the processor 910 runs the instructions. Optionally, the processor 910 and the memory 930 may be integrated.

When the satellite core network deployment apparatus 900 is configured to implement the method shown in FIG. 2 or FIG. 7, the processor 910 is configured to implement functions of the processing unit 810, and the interface circuit 920 is configured to implement functions of the transceiver unit 820.

When the foregoing satellite core network deployment apparatus is a chip used in a terminal, the chip used in the terminal implements functions of the terminal in the foregoing method embodiments. The chip used in the terminal receives information from another module (such as a radio frequency module or an antenna) in the terminal, where the information is sent by an access network satellite network element to the terminal. Alternatively, the chip used in the terminal sends information to another module (such as a radio frequency module or an antenna) in the terminal, where the information is sent by the terminal to an access network satellite network element.

When the foregoing satellite core network deployment apparatus is a chip used in an access network satellite network element, the chip used in the access network satellite network element implements functions of the access network satellite network element in the foregoing method embodiments. The chip used in the access network satellite network element receives information from another module (for example, a radio frequency module or an antenna) in the access network satellite network element, where the information is sent by a terminal to the access network satellite network element. Alternatively, the chip used in the access network satellite network element sends information to another module (such as a radio frequency module or an antenna) in the access network satellite network element, where the information is sent by the access network satellite network element to a terminal.

When the foregoing satellite core network deployment apparatus is a chip used in a first core network satellite network element, the chip used in the first core network satellite network element implements functions of the first core network satellite network element in the foregoing method embodiments. The chip used in the first core network satellite network element receives information from another module (for example, a radio frequency module or an antenna) in the first core network satellite network element, where the information is sent by a terminal, an access network satellite network element, and a second core network satellite network element to the first core network satellite network element. Alternatively, the chip used in the first core network satellite network element sends information to another module (for example, a radio frequency module or an antenna) in the first core network satellite network element, where the information is sent by the first core network satellite network element to a terminal, an access network satellite network element, and a second core network satellite network element.

When the foregoing satellite core network deployment apparatus is a chip used in a second core network satellite network element, the chip used in the second core network satellite network element implements functions of the second core network satellite network element in the foregoing method embodiments. The chip used in the second core network satellite network element receives information from another module (for example, a radio frequency module or an antenna) in the second core network satellite network element, where the information is sent by a terminal, an access network satellite network element, and a first core network satellite network element to the second core network satellite network element. Alternatively, the chip used in the second core network satellite network element sends information to another module (for example, a radio frequency module or an antenna) in the second core network satellite network element, where the information is sent by the second core network satellite network element to a terminal, an access network satellite network element, and a first core network satellite network element.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a logic circuit, a hardware component, or any combination thereof. The general-purpose processor may be a microprocessor or any regular processor or the like.

The method steps in embodiments of this application may be implemented in a hardware manner, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal, an access network satellite network element, a first core network satellite network element, or a second core network satellite network element. Certainly, the processor and the storage medium may alternatively exist in the terminal, the access network satellite network element, the first core network satellite network element, or the second core network satellite network element as discrete components.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a terminal, an access network satellite network element, a first core network satellite network element, a second core network satellite network element, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. In this application, "first" and "second" are merely examples, and there may be one or more "first" and "second". "First" and "second" are only used to distinguish objects of a same type. A first object and a second object may be a same object, or may be different objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A satellite core network deployment method, wherein the method comprises:
receiving, by a terminal from an access network satellite network element, information about a core network satellite network element set corresponding to the terminal, wherein the core network satellite network element set corresponding to the terminal comprises a first core network satellite network element and a second core network satellite network element, the first core network satellite network element and the second core network satellite network element belong to different layers, and the first core network satellite network element accompanies the access network satellite network element; and
sending, by the terminal, a registration request to the second core network satellite network element.

2. The method according to claim 1, wherein the first core network satellite network element and the access network satellite network element form a satellite formation, and a spatial location relationship between the first core network satellite network element and the access network satellite network element remains unchanged.

3. A satellite core network deployment method, wherein the method comprises:
receiving, by an access network satellite network element, an access request from a terminal;
obtaining, by the access network satellite network element from an interface management function network element, network topology information of a plurality of core network satellite network elements, wherein the plurality of core network satellite network elements correspond to one or more core network functions;
determining, by the access network satellite network element, a candidate core network satellite network element set based on a location area in which the access network satellite network element is located and the network topology information, wherein the candidate core network satellite network element set is a subset of the plurality of core network satellite network elements; and
determining, by the access network satellite network element from the candidate core network satellite network element set, a core network satellite network element set corresponding to the terminal based on at least one of an identifier of the access network satellite network element, an identifier of the terminal, and a location of the terminal, wherein each core network satellite network element in the core network satellite network element set corresponding to the terminal corresponds to one core network function.

4. The method according to claim 3, wherein the method further comprises:
sending, by the access network satellite network element to the terminal, information about the core network satellite network element set corresponding to the terminal.

5. The method according to claim 3 or 4, wherein the network topology information comprises at least one piece of the following information: a physical layer parameter of an interface between the plurality of core network satellite network elements, a protocol stack parameter of the interface between the plurality of core network satellite network elements, orchestration information of a satellite in which the plurality of core network satellite network elements are located, and load information of the plurality of core network satellite network elements.

6. The method according to any one of claims 3 to 5, wherein the determining, by the access network satellite network element from the candidate core network satellite network element set, a core network satellite network element set corresponding to the terminal based on at least one of an identifier of the access network satellite network element, an identifier of the terminal, and a location of the terminal comprises:
determining, by the access network satellite network element from the candidate core network satellite network element set according to a hash algorithm and an average allocation rule, the core network satellite network element set corresponding to the terminal.

7. The method according to any one of claims 3 to 6, wherein the method further comprises:
switching, by the access network satellite network element, the core network satellite network element set corresponding to the terminal to a target core network satellite network element set, wherein the core network satellite network element set corresponding to the terminal one-to-one corresponds to the target core network satellite network element set; and
sending, by the access network satellite network element to the target core network satellite network element set, a context of the core network satellite network element set corresponding to the terminal.

8. The method according to any one of claims 3 to 7, wherein the core network satellite network element set corresponding to the terminal comprises a first core network satellite network element and a second core network satellite network element, the first core network satellite network element and the second core network satellite network element belong to different layers, and the first core network satellite network element accompanies the access network satellite network element.

9. The method according to claim 8, wherein the layer is classified based on at least one of a frequency of invoking a core network function, a security level of a service, and importance of the core network function.

10. The method according to claim 8 or 9, wherein the first core network satellite network element and the access network satellite network element form a satellite formation, and a spatial location relationship between the first core network satellite network element and the access network satellite network element remains unchanged.

11. A satellite core network deployment method, wherein a core network satellite network element set corresponding to a terminal comprises a first core network satellite network element and a second core network satellite network element, the first core network satellite network element and the second core network satellite network element belong to different layers, and the first core network satellite network element accompanies an access network satellite network element; and the method comprises:
receiving, by the first core network satellite network element, a session establishment request from the terminal;
obtaining, by the first core network satellite network element, registration information generated by the second core network satellite network element, wherein the registration information comprises at least one piece of the following information: a user authentication context, subscription data, and a policy context; and
establishing, by the first core network satellite network element, a session based on the registration information and the session establishment request.

12. The method according to claim 11, wherein the obtaining, by the first core network satellite network element, registration information generated by the second core network satellite network element comprises any one of the following operations:
obtaining, by the first core network satellite network element, the registration information from the second core network satellite network element;
obtaining, by the first core network satellite network element, the registration information from a temporary network element at a slave core network layer, wherein the first core network satellite network element is located at the slave core network layer, and the temporary network element is configured to cache the registration information obtained from the second core network satellite network element; or
obtaining, by the first core network satellite network element, the registration information from a third core network satellite network element at the slave core network layer, wherein the third core network satellite network element is configured to cache the registration information obtained from the second core network satellite network element.

13. The method according to claim 11 or 12, wherein the layer is classified based on at least one of a frequency of invoking a core network function, a security level of a service, and importance of the core network function.

14. The method according to any one of claims 11 to 13, wherein the first core network satellite network element and the access network satellite network element form a satellite formation, and a spatial location relationship between the first core network satellite network element and the access network satellite network element remains unchanged.

15. A satellite core network deployment method, wherein a core network satellite network element set corresponding to a terminal comprises a first core network satellite network element and a second core network satellite network element, the first core network satellite network element and the second core network satellite network element belong to different layers, and the first core network satellite network element accompanies an access network satellite network element; and the method comprises:
receiving, by the second core network satellite network element, a registration request from the terminal;
performing, by the second core network satellite network element, a registration operation based on the registration request, to obtain registration information, wherein the registration information comprises at least one piece of the following information: a user authentication context, subscription data, and a policy context; and
storing, by the second core network satellite network element, the registration information, or sending the registration information to a temporary network element or a third core network satellite network element located at a slave core network layer for caching.

16. The method according to claim 15, wherein the layer is classified based on at least one of a frequency of invoking a core network function, a security level of a service, and importance of the core network function.

17. The method according to claim 15 or 16, wherein the first core network satellite network element and the access network satellite network element form a satellite formation, and a spatial location relationship between the first core network satellite network element and the access network satellite network element remains unchanged.

18. A satellite core network deployment apparatus, wherein the apparatus comprises:
a transceiver unit, configured to receive, from an access network satellite network element, information about a core network satellite network element set corresponding to the terminal, wherein the core network satellite network element set corresponding to the terminal comprises a first core network satellite network element and a second core network satellite network element, the first core network satellite network element and the second core network satellite network element belong to different layers, and the first core network satellite network element accompanies the access network satellite network element; and
the transceiver unit is further configured to send a registration request to the second core network satellite network element.

19. A satellite core network deployment apparatus, wherein the apparatus comprises:
a transceiver unit, configured to receive an access request from a terminal; and
a processing unit, configured to obtain network topology information of a plurality of core network satellite network elements from an interface management function network element, wherein the plurality of core network satellite network elements correspond to one or more core network functions, wherein
the processing unit is further configured to determine a candidate core network satellite network element set based on a location area in which the access network satellite network element is located and the network topology information, wherein the candidate core network satellite network element set is a subset of the plurality of core network satellite network elements; and
the processing unit is further configured to determine, from the candidate core network satellite network element set, a core network satellite network element set corresponding to the terminal based on at least one of an identifier of the access network satellite network element, an identifier of the terminal, and a location of the terminal, wherein each core network satellite network element in the core network satellite network element set corresponding to the terminal corresponds to one core network function.

20. The apparatus according to claim 19, wherein the transceiver unit is further configured to send, to the terminal, information about the core network satellite network element set corresponding to the terminal.

21. The apparatus according to claim 19 or 20, wherein the network topology information comprises at least one piece of the following information: a physical layer parameter of an interface between the plurality of core network satellite network elements, a protocol stack parameter of the interface between the plurality of core network satellite network elements, orchestration information of a satellite in which the plurality of core network satellite network elements are located, and load information of the plurality of core network satellite network elements.

22. The apparatus according to any one of claims 19 to 21, wherein the processing unit is configured to determine, from the candidate core network satellite network element set according to a hash algorithm and an average allocation rule, the core network satellite network element set corresponding to the terminal.

23. The apparatus according to any one of claims 19 to 22, wherein the processing unit is further configured to switch the core network satellite network element set corresponding to the terminal to a target core network satellite network element set, wherein the core network satellite network element set corresponding to the terminal one-to-one corresponds to the target core network satellite network element set; and
the transceiver unit is further configured to send, to the target core network satellite network element set, a context of the core network satellite network element set corresponding to the terminal.

24. The apparatus according to any one of claims 19 to 23, wherein the core network satellite network element set corresponding to the terminal comprises a first core network satellite network element and a second core network satellite network element, the first core network satellite network element and the second core network satellite network element belong to different layers, and the first core network satellite network element accompanies the access network satellite network element.

25. The apparatus according to claim 24, wherein the layer is classified based on at least one of a frequency of invoking a core network function, a security level of a service, and importance of the core network function.

26. A satellite core network deployment apparatus, wherein a core network satellite network element set corresponding to a terminal comprises a first core network satellite network element and a second core network satellite network element, the first core network satellite network element and the second core network satellite network element belong to different layers, and the first core network satellite network element accompanies an access network satellite network element; and the apparatus comprises:
a transceiver unit, configured to receive a session establishment request from the terminal, wherein
the transceiver unit is further configured to obtain registration information generated by the second core network satellite network element, wherein the registration information comprises at least one piece of the following information: a user authentication context, subscription data, and a policy context; and
a processing unit, configured to establish a session based on the registration information and the session establishment request.

27. The apparatus according to claim 26, wherein the transceiver unit is configured to perform any one of the following operations:
obtaining the registration information from the second core network satellite network element;
obtaining the registration information from a temporary network element at a slave core network layer, wherein the apparatus is located at the slave core network layer, and the temporary network element is configured to cache the registration information obtained from the second core network satellite network element; or
obtaining the registration information from a third core network satellite network element at the slave core network layer, wherein the third core network satellite network element is configured to cache the registration information obtained from the second core network satellite network element.

28. The apparatus according to claim 26 or 27, wherein the layer is classified based on at least one of a frequency of invoking a core network function, a security level of a service, and importance of the core network function.

29. A satellite core network deployment apparatus, wherein a core network satellite network element set corresponding to a terminal comprises a first core network satellite network element and a second core network satellite network element, the first core network satellite network element and the second core network satellite network element belong to different layers, and the first core network satellite network element accompanies an access network satellite network element; and the apparatus comprises:
a transceiver unit, configured to receive a registration request from the terminal; and
a processing unit, configured to perform a registration operation based on the registration request, to obtain registration information, wherein the registration information comprises at least one piece of the following information: a user authentication context, subscription data, and a policy context, and
the processing unit is further configured to: control the apparatus to store the registration information, or send the registration information to a temporary network element or a third core network satellite network element located at a slave core network layer for caching.

30. The apparatus according to claim 29, wherein the layer is classified based on at least one of a frequency of invoking a core network function, a security level of a service, and importance of the core network function.

31. A satellite communication system, comprising the apparatus according to claim 18, the apparatus according to any one of claims 19 to 25, the apparatus according to any one of claims 26 to 28, and the apparatus according to any one of claims 29 and 30.

32. A computer-readable storage medium, wherein the computer-readable storage medium stores a computer program, and when the program is executed by a processor, the method according to any one of claims 1 and 2, the method according to any one of claims 3 to 10, the method according to any one of claims 11 to 14, and the method according to any one of claims 15 to 17 are implemented.

33. A computer program product, configured to: when executed on a computing device, perform the method according to any one of claims 1 and 2, perform the method according to any one of claims 3 to 10, perform the method according to any one of claims 11 to 14, and perform the method according to any one of claims 15 to 17.
